# EUROPEAN PATENT APPLICATION

(11) **EP 4 610 733 A1**
(43) Date of publication of application: **03.09.2025**
(21) Application number: 25159061.8
(22) Date of filing: 20.02.2025
(51) Int. Cl.: G03G 15/00, G03G 15/04, G03G 21/00, G02B 27/00, H04N 1/00, G03G 21/16

(54) **CLEANING DEVICE AND IMAGE FORMING APPARATUS**

(30) Priority: 28.02.2024 JP 2024028664
(71) Applicant: KYOCERA Document Solutions Inc., Osaka-shi, Osaka, 540-8585 (JP)
(72) Inventor: Kunimasa, Takuto, Osaka-shi 540-8585 (JP)
(74) Representative: Plougmann Vingtoft a/s

(57) **Abstract**

A cleaning device (67) includes a state determination processing portion (752) and an abnormality determination processing portion (753). The state determination processing portion (752), when a movement detecting portion (72) does not detect a moving body (69A, 69B) before a predetermined specific time passes since a start of a drive of a drive source (71), determines a drive state of the drive source (71) based on a detection result of a current detecting portion (74). The abnormality determination processing portion (753) determines that an abnormality has occurred in the movement detecting portion (72) when the state determination processing portion (752) determines that the drive source (71) is being driven, and determines that an abnormality has occurred in the drive source (71) when the state determination processing portion (752) determines that the drive source (71) is not being driven.

## Description

### INCORPORATION BY REFERENCE

This application is based upon and claims the benefit of priority from the corresponding Japanese Patent Application No. 2024-028664 filed on February 28, 2024, the entire contents of which are incorporated herein by reference.

### BACKGROUND

The present disclosure relates to a cleaning device and an image forming apparatus.

An image forming apparatus such as a printer may be provided with a cleaning device that automatically cleans a cleaning target such as an outgoing window of an optical scan device or a wire of a charging device. Specifically, a cleaning device of this type includes a cleaning portion, and the cleaning device cleans the cleaning target by moving the cleaning portion by a driving force transmitted from a drive source such as a motor while the cleaning portion is in contact with the cleaning target. Meanwhile, a drive control of the cleaning portion may be performed based on a detection result of a movement detecting portion such as an optical sensor provided to detect a position of the cleaning portion. In addition, the drive control of the cleaning portion may be performed based on a change of drive current of the drive source without using the movement detecting portion.

### SUMMARY

A cleaning device according to an aspect of the present disclosure includes a moving mechanism, a current detecting portion, a movement detecting portion, a drive processing portion, a state determination processing portion, and an abnormality determination processing portion. The moving mechanism moves a moving body including a cleaning portion that is in contact with the cleaning target, along a cleaning target. The current detecting portion detects a drive current of a drive source that supplies a driving force to the moving mechanism. The movement detecting portion detects the moving body at a predetermined specific position. The drive processing portion, upon detection of the moving body by the movement detecting portion after a start of a drive of the drive source, stops the drive source. The state determination processing portion, when the movement detecting portion does not detect the moving body before a predetermined specific time passes since the start of the drive of the drive source, determines a drive state of the drive source based on a detection result of the current detecting portion. The abnormality determination processing portion determines that an abnormality has occurred in the movement detecting portion when the state determination processing portion determines that the drive source is being driven, and determines that an abnormality has occurred in the drive source when the state determination processing portion determines that the drive source is not being driven.

An image forming apparatus according to another aspect of the present disclosure includes: the cleaning device; and an optical scan device configured to scan light on a photoconductor. The cleaning target is a light transmissive member provided on an irradiation path through which the light emitted from the optical scan device is passed.

This Summary is provided to introduce a selection of concepts in a simplified form that are further described below in the Detailed Description with reference where appropriate to the accompanying drawings. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIG. 1 is a cross section diagram schematically showing a configuration of an image forming apparatus according to an embodiment of the present disclosure.
FIG. 2 is a perspective diagram showing an optical scan device of the image forming apparatus according to the embodiment of the present disclosure in a state where a cleaning device has been removed from the optical scan device.
FIG. 3 is a perspective diagram showing an example of the cleaning device attached to the optical scan device of the image forming apparatus according to the embodiment of the present disclosure.
FIG. 4 is a block diagram showing a system configuration of the cleaning device according to the embodiment of the present disclosure.
FIG. 5 is a flowchart showing an example of a cleaning control process of the cleaning device according to the embodiment of the present disclosure.
FIG. 6 is a flowchart showing an example of an abnormality detection process in the cleaning control process of the cleaning device according to the embodiment of the present disclosure.

### DETAILED DESCRIPTION

The following describes an embodiment of the present disclosure with reference to the accompanying drawings. It should be noted that the following embodiment is an example of specific embodiment of the present disclosure and should not limit the technical scope of the present disclosure.

### [Outline configuration of image forming apparatus 10]

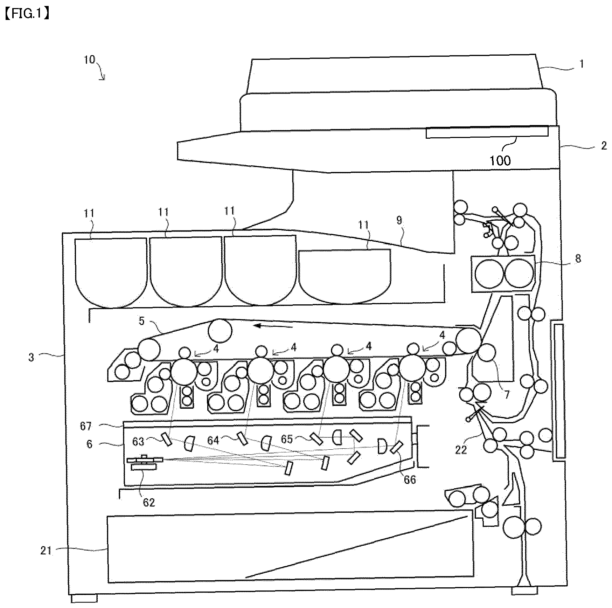

As shown in FIG. 1, an image forming apparatus 10 according to the present embodiment includes an operation/display portion 100, an ADF 1, an image reading portion 2, and an image forming portion 3.

The operation/display portion 100 includes: an operation portion for receiving user operations; and a display portion for displaying a variety of information. For example, the operation/display portion 100 is a touch panel.

The image forming apparatus 10 is a multifunction peripheral having a print function, a facsimile function, a scan function, a copy function and the like. It is noted that the present disclosure is applicable to image processing apparatuses such as a facsimile or a copier.

The ADF 1 is an automatic document sheet conveying device configured to convey a sheet, such as a sheet of paper placed on a document sheet setting portion as a document sheet, in such a way as to pass over a reading position at which image data is read by the image reading portion 2. The image reading portion 2 is configured to read an image from a sheet placed, as a document sheet, on a contact glass, or from a sheet conveyed by the ADF 1. Specifically, the image reading portion 2 includes a variety of optical members such as a light source, a mirror, a lens, and a CCD.

The image forming portion 3 includes a plurality of process units 4, an intermediate transfer belt 5, an optical scan device 6, a secondary transfer roller 7, a fixing device 8, a sheet discharge tray 9, a plurality of toner containers 11, a sheet feed cassette 21, and a conveyance path 22. The image forming portion 3 forms a monochrome or color image on a sheet based on input image data.

Each of the process units 4 is an electrophotographic process unit including a photoconductor drum, a charging device, a developing device, a primary transfer roller, an electricity removal device, and a cleaning device. The process units 4, aligned along a running direction of the intermediate transfer belt 5, constitute what is called a tandem-type image forming portion. Specifically, the process units 4 respectively form toner images that correspond to C (cyan), M (magenta), Y (yellow), and K (black).

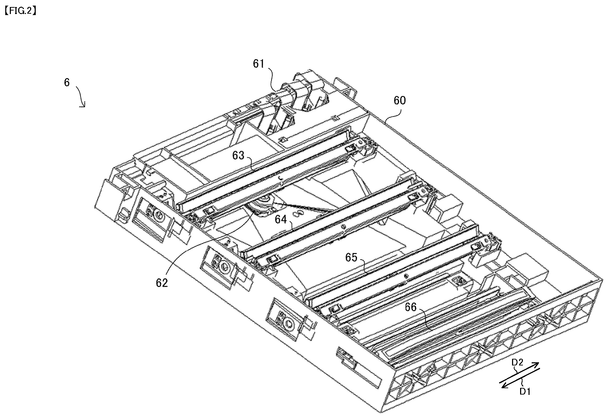

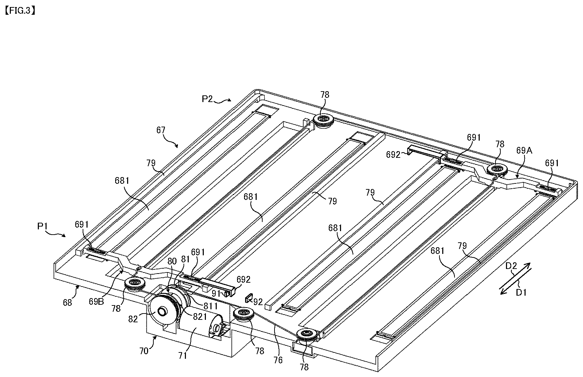

As shown in FIG. 2 and FIG. 3, the optical scan device 6 includes a unit housing 60, a light source unit 61, a polygon mirror 62, outgoing mirrors 63 to 66, and a cleaning device 67. The cleaning device 67 is attached to the optical scan device 6 in a detachable manner. In addition, by being attached to the optical scan device 6, the cleaning device 67 functions as an upper cover of the optical scan device 6. It is noted that FIG. 2 is a perspective diagram showing the optical scan device 6 in a state where the cleaning device 67 has been removed. In another embodiment, the cleaning device 67 may not be detachable from the optical scan device 6.

In the optical scan device 6, laser lights respectively corresponding to the process units 4 are emitted from the light source unit 61, and deflect-scanned by the polygon mirror 62 in main scanning directions D1 and D2. The lights scanned by the polygon mirror 62 are guided into the outgoing mirrors 63 to 66 via a variety of optical members such as lenses or mirrors. The lights scanned by the polygon mirror 62 are guided into the outgoing mirrors 63 to 66 via optical members such as a variety of lenses or mirrors. The laser lights reflected on the outgoing mirrors 63 to 66 are respectively irradiated onto the photoconductor drums of the process units 4.

### [Configuration of cleaning device 67]

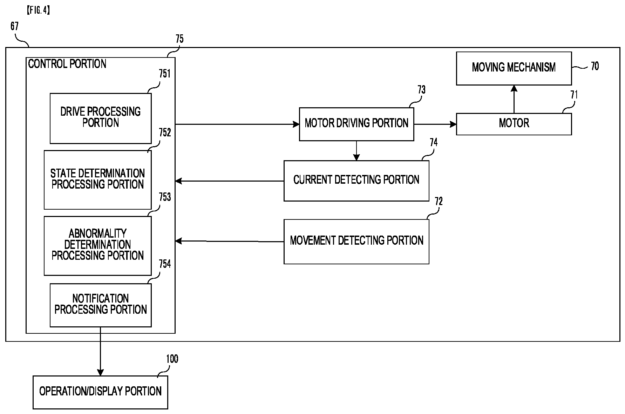

As shown in FIG. 3 and FIG. 4, the cleaning device 67 includes a cover portion 68, two moving bodies 69A and 69B, a moving mechanism 70, a motor 71, a movement detecting portion 72, a motor driving portion 73, a current detecting portion 74, and a control portion 75. It is noted that the control portion 75 may also serve as a main control portion that comprehensively controls the image forming apparatus 10, or may be provided independently of the main control portion.

The cover portion 68 includes a plurality of outgoing windows 681 provided on irradiation paths through which laser lights emitted from the outgoing mirrors 63 to 66 of the optical scan device 6 are passed. The outgoing windows 681 are an example of a light transmissive member that is a cleaning target of the present disclosure.

The moving bodies 69A and 69B clean the outgoing windows 681 that are the cleaning target, by sliding while in contact with the outgoing windows 681. Specifically, each of the moving bodies 69A and 69B includes two cleaning portions 691 corresponding to two outgoing windows 681. In the cleaning device 67, the moving mechanism 70 reciprocally drives the two moving bodies 69A and 69B along the four outgoing windows 681 such that the four outgoing windows 681 are cleaned simultaneously by the cleaning portions 691 of the moving bodies 69A and 69B. It is noted that instead of the moving bodies 69A and 69B, four moving bodies corresponding to the four outgoing windows 681 may be provided, or only one moving body may be provided.

The moving mechanism 70 reciprocally drives the moving bodies 69A and 69B including the cleaning portions 691 that are in contact with the outgoing windows 681, along the longitudinal direction of the outgoing windows 681. Specifically, the moving mechanism 70 includes a wire 76, a plurality of pulleys 78, four guide rails 79, and a drum 80. The drum 80 of the moving mechanism 70 includes a first drum 81 and a second drum 82. The first drum 81 includes a winding portion 811, and the second drum 82 includes a winding portion 821. The first drum 81 and the second drum 82 are integrated and rotate in the same direction.

Both ends of the wire 76 are connected to the drum 80, and the wire 76 is stretched by a plurality of pulleys 78 that are disposed on a path that extends out from the first drum 81 of the drum 80 and returns to the second drum 82 of the drum 80. Both ends of the wire 76 are respectively connected to the first drum 81 and the second drum 82 such that the winding directions thereof are reversed to each other. That is, when the first drum 81 and the second drum 82 rotate in the same direction, the wire 76 is pulled out from one of the first drum 81 and the second drum 82 and wound around the other.

The first drum 81 is coupled with a drive shaft of the motor 71 via a drive transmission member that includes, for example, a drive gear (not shown) and a worm gear (not shown). The motor 71 is a drive source such as a DC brush motor that can drive forwardly and reversely, and supplies a driving force to the moving mechanism 70. The first drum 81 rotates forwardly and reversely when the motor 71 drives forwardly and reversely. The second drum 82 is integrated with the first drum 81, and thus with the rotation of the first drum 81, rotates in the same direction as the first drum 81.

The wire 76 is connected to the two moving bodies 69A and 69B such that the moving bodies 69A and 69B move reciprocally as the wire 76 moves reciprocally. Specifically, as shown in FIG. 3, the moving bodies 69A and 69B are disposed such that when one of the moving bodies 69A and 69B is located at one end of the outgoing windows 681, the other is located at the other end of the outgoing windows 681. In addition, when the moving body 69A moves from one end of the outgoing windows 681 toward the other end, the moving body 69B moves from the other end of the outgoing windows 681 toward the one end.

The moving mechanism 70 with the above-described configuration is driven as the first drum 81 is rotated clockwise (forward direction) or counterclockwise (reverse direction) by the motor 71. When the first drum 81 is rotated counterclockwise, the wire 76 is wound around the winding portion 811 of the first drum 81 and is pulled out from the winding portion 821 of the second drum 82. This allows the moving body 69A to move in the main scanning direction D1 and the moving body 69B to move in the main scanning direction D2. On the other hand, when the first drum 81 is rotated clockwise, the wire 76 is pulled out from the winding portion 811 of the first drum 81 and is wound around the winding portion 821 of the second drum 82. This allows the moving body 69A to move in the main scanning direction D2 and the moving body 69B to move in the main scanning direction D1.

The four guide rails 79 extend along the main scanning directions D1 and D2. Each of the guide rails 79 is engaged with a part of the moving bodies 69A and 69B and restricts the moving direction of the moving bodies 69A and 69B to the main scanning directions D1 and D2.

As shown in FIG. 3, the movement detecting portion 72 is provided at a predetermined specific position that is an end portion P1 located downstream in the main scanning direction D1 of the outgoing windows 681, and detects the moving bodies 69A and 69B at the specific position. The movement detecting portion 72 is an optical sensor including a light emitting portion 91 and a light receiving portion 92, wherein the light emitting portion 91 emits light, and the light receiving portion 92 detects the light received from the light emitting portion 91. The movement detecting portion 72 outputs to the control portion 75 a detection signal that indicates whether or not the light emitted from the light emitting portion 91 has been received by the light receiving portion 92.

Specifically, each of the moving bodies 69A and 69B includes a detected portion 692, and when the moving body 69A or 69B moves to the end portion P1 located downstream in the main scanning direction D1 of the outgoing windows 681, the detected portion 692 thereof is positioned between the light emitting portion 91 and the light receiving portion 92 of the movement detecting portion 72 to block the light. When the moving body 69A moves from an end portion P2 located downstream in the main scanning direction D2 of the outgoing windows 681 to the end portion P1, the detected portion 692 of the moving body 69A is positioned between the light emitting portion 91 and the light receiving portion 92 of the movement detecting portion 72 to block the light. In addition, when the moving body 69B moves from the end portion P2 to the end portion P1, too, the detected portion 692 of the moving body 69B is positioned between the light emitting portion 91 and the light receiving portion 92 of the movement detecting portion 72 to block the light. Accordingly, a detection signal indicating that the moving body 69A has moved from the end portion P1 to the end portion P2, and a detection signal indicating that the moving body 69A has moved from the end portion P2 to the end portion P1, are output from the movement detecting portion 72 to the control portion 75.

The motor driving portion 73 drives the motor 71 based on a drive control signal from a drive processing portion 751. The motor driving portion 73 is, for example, configured as a drive circuit including: an input portion connected to a DC voltage; and a switching element.

The current detecting portion 74 detects a drive current that flows through the motor 71. The drive current detected by the current detecting portion 74 is input to an analog port of the control portion 75. It is noted that the current detecting portion 74 may be built in the motor driving portion 73.

The control portion 75 includes control equipment such as a CPU, a ROM, and a RAM. The CPU includes one or more processors that execute a variety of calculation processes. The ROM is a nonvolatile storage device in which are preliminarily stored information such as control programs for causing the CPU to execute a variety of processes. The RAM is a volatile storage device that is used as a temporary storage memory (working area) for the variety of processes executed by the CPU. In the control portion 75, the CPU executes a variety of control programs preliminarily stored in the ROM.

Meanwhile, in a case where either a drive control based on a detection result of the movement detecting portion 72, or a drive control based on a drive current of a drive source such as the motor 71, is executed, and when an abnormality occurs in the movement detecting portion 72 or the motor 71, the abnormality cannot be determined. On the other hand, when an abnormality occurs in the movement detecting portion 72 or the motor 71, the image forming apparatus 10 and the cleaning device 67 according to the present embodiment can determine the abnormality.

Specifically, as shown in FIG. 4, the control portion 75 includes a variety of processing portions such as the drive processing portion 751, a state determination processing portion 752, an abnormality determination processing portion 753, and a notification processing portion 754. The control portion 75 functions as the variety of processing portions by executing a variety of processes in accordance with the control programs stored in the ROM. It is noted that the variety of processing portions of the control portion 75 may be composed of an electronic circuit such as an integrated circuit (ASIC).

The drive processing portion 751 controls voltage that is applied to the motor 71 via the motor driving portion 73, by transmitting the drive control signal to the motor driving portion 73. Specifically, the drive processing portion 751 controls the forward rotation drive, reverse rotation drive, drive stop and the like of the motor 71, by transmitting the drive control signal.

When the movement detecting portion 72 does not detect the moving body 69A or 69B after the motor 71 starts being driven, the state determination processing portion 752 determines the drive state of the motor 71 based on the detection result of the current detecting portion 74. Specifically, the state determination processing portion 752 determines that the motor 71 is being driven when the drive current of the motor 71 detected by the current detecting portion 74 is equal to or higher than a predetermined specific value, and determines that the motor 71 is being stopped when the drive current of the motor 71 detected by the current detecting portion 74 is lower than the specific value.

The abnormality determination processing portion 753 detects an abnormality of the movement detecting portion 72 when the state determination processing portion 752 determines that the motor 71 is being driven, and detects an abnormality of the motor 71 when the state determination processing portion 752 determines that the motor 71 is not being driven.

The notification processing portion 754 executes a notification process when the abnormality determination processing portion 753 determines an abnormality. Specifically, the notification processing portion 754 displays on the operation/display portion 100 the determination result such as an occurrence of the abnormality and the content of the abnormality. In addition, the notification processing portion 754 may transmit the occurrence of the abnormality, the content of the abnormality and the like to a predetermined notification destination such as an information processing apparatus to which the image forming apparatus 10 is communicably connected.

### [Cleaning control process]

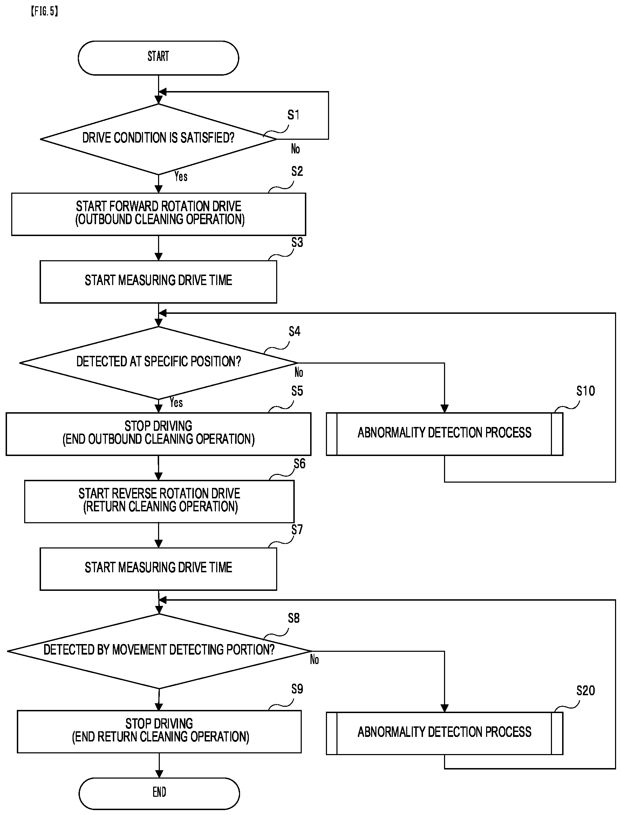

In the following, with reference to the flowchart of FIG. 5, a description is given of an example of the procedure of the cleaning control process executed by the control portion 75.

### <Step S1>

In step S1, the control portion 75 determines whether or not a drive condition of the cleaning device 67 is satisfied (step S1). Upon determining that the drive condition of the cleaning device 67 is satisfied (step S1: Yes), the control portion 75 moves the process to step S2. On the other hand, upon determining that the drive condition of the cleaning device 67 is not satisfied (step S1: No), the control portion 75 waits at step S1 until the drive condition of the cleaning device 67 is satisfied.

For example, the drive condition is that a predetermined time period has passed since the immediate previous driving of the cleaning device 67, or that a predetermined number of prints have been printed since the immediate previous driving of the cleaning device 67. In addition, the drive condition may be that the image forming apparatus 10 has been powered on, that the image forming apparatus 10 has returned from a power saving mode, or that the photoconductor drum, the toner container 11 or the like of the image forming portion 3 has been replaced.

### <Step S2>

In step S2, the drive processing portion 751 of the control portion 75 outputs, to the motor driving portion 73, a drive control signal to start the forward rotation drive of the motor 71. This allows the cleaning device 67 to start a cleaning operation in which the motor 71 is driven to rotate forwardly, and the moving mechanism 70 allows one of the moving bodies 69A and 69B to move from the end portion P1 of the outgoing windows 681 toward the end portion P2 and the other of the moving bodies 69A and 69B to move from the end portion P2 of the outgoing windows 681 toward the end portion P1. At this time, the cleaning portions 691 held by the moving bodies 69A and 69B clean the outgoing windows 681 that are the cleaning target, by moving along the outgoing windows 681 while in contact with the outgoing windows 681. It is noted that in the following description, the cleaning operation started here may be called an outbound cleaning operation.

### <Step S3>

In step S3, the control portion 75 starts measuring the drive time of the motor 71 from 0 (zero). The drive time measured here indicates the execution time of the outbound cleaning operation.

### <Step S4>

In step S4, the drive processing portion 751 of the control portion 75 determines, based on a detection signal from the movement detecting portion 72, whether or not either one of the moving bodies 69A and 69B has reached the specific position that is the end portion P1 located on a side where the movement detecting portion 72 is provided. Specifically, upon determining, based on the detection signal from the movement detecting portion 72, that there was a change from a state where the light emitted from the light emitting portion 91 of the movement detecting portion 72 is received by the light receiving portion 92 to a state where the light is not received by the light receiving portion 92, the drive processing portion 751 determines that either one of the moving bodies 69A and 69B has reached the specific position. That is, in step S4, it is determined whether or not the outbound cleaning operation has ended.

### <Step S5>

In step S5, the drive processing portion 751 of the control portion 75 outputs, to the motor driving portion 73, a drive control signal to stop driving the motor 71. This allows the either one of the moving bodies 69A and 69B to stop at the specific position.

### <Step S6>

Subsequently, in step S6, the drive processing portion 751 of the control portion 75 outputs, to the motor driving portion 73, a drive control signal to start the reverse rotation drive of the motor 71. This allows the cleaning device 67 to start a cleaning operation in which the motor 71 is driven to rotate reversely, and the moving mechanism 70 allows one of the moving bodies 69A and 69B to move from the end portion P1 of the outgoing windows 681 toward the end portion P2 and the other of the moving bodies 69A and 69B to move from the end portion P2 of the outgoing windows 681 toward the end portion P1. At this time, the cleaning portions 691 held by the moving bodies 69A and 69B clean the outgoing windows 681 that are the cleaning target, by moving along the outgoing windows 681 while in contact with the outgoing windows 681. It is noted that in the following description, the cleaning operation started here may be called a return cleaning operation.

### <Step S7>

In step S7, the control portion 75 starts measuring the drive time of the motor 71 from 0 (zero). The drive time measured here indicates the execution time of the return cleaning operation.

### <Step S8>

In step S8, the drive processing portion 751 of the control portion 75 determines, based on a detection signal from the movement detecting portion 72, whether or not either one of the moving bodies 69A and 69B has reached the specific position that is the end portion P1 located on a side where the movement detecting portion 72 is provided. Specifically, upon determining, based on the detection signal from the movement detecting portion 72, that there was a change from a state where the light emitted from the light emitting portion 91 of the movement detecting portion 72 is received by the light receiving portion 92 to a state where the light is not received by the light receiving portion 92, the drive processing portion 751 determines that either one of the moving bodies 69A and 69B has reached the specific position. That is, in step S8, it is determined whether or not the return cleaning operation has ended.

### <Step S9>

In step S9, the drive processing portion 751 of the control portion 75 outputs, to the motor driving portion 73, a drive control signal to stop driving the motor 71. This allows the either one of the moving bodies 69A and 69B to stop at the specific position. Thereafter, the control portion 75 ends the sequence of the cleaning control process, and returns the process to step S1.

As described above, when the movement detecting portion 72 operates normally, the control portion 75 controls the operation of the cleaning device 67 based on the detection result of the movement detecting portion 72. On the other hand, when it is determined in step S4 that the movement detecting portion 72 has not detected the moving body 69A or 69B (S4: No), the control portion 75 executes an abnormality detection process in the following step S10. Similarly, when it is determined in step S8 that the movement detecting portion 72 has not detected the moving body 69A or 69B (S8: No), the control portion 75 executes the abnormality detection process in the following step S20.

### [Abnormality detection process]

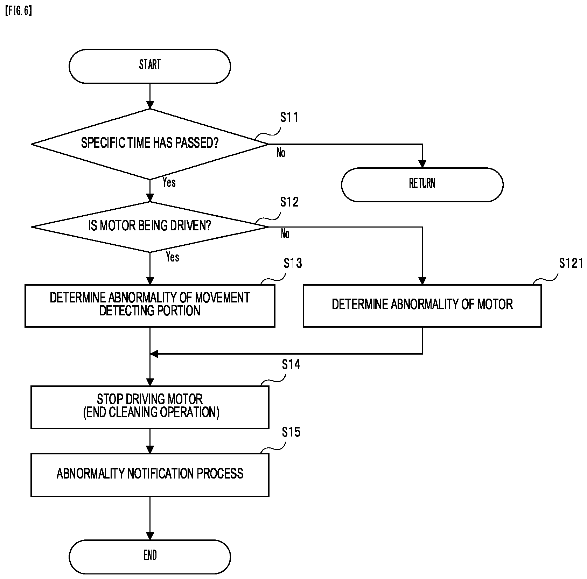

In the following, with reference to FIG. 6, a description is given of an example of the abnormality detection process executed in the step S10 or the step S20.

### <Step S11>

In step S11, the state determination processing portion 752 of the control portion 75 determines, based on the drive time that has started being measured in the step S3 or S7, whether or not a predetermined specific time has passed since the start of driving the motor 71. The specific time is preliminarily set based on a result of measuring a time taken for the moving bodies 69A and 69B to move from one end to the other end after the motor 71 is driven in the cleaning device 67 of the image forming apparatus 10. In addition, the specific time may be preliminarily set based on a relationship between the drive time of the motor 71 and the travel distance of the moving bodies 69A and 69B in the cleaning device 67 of the image forming apparatus 10. It is noted that although in the present embodiment, the specific time is the same in the outbound cleaning operation and the return cleaning operation, in another embodiment, the specific time may be different in the outbound cleaning operation and the return cleaning operation.

When it is determined that the specific time has passed (S11: Yes), the process moves to step S12. On the other hand, when it is determined that the specific time has not passed (S11: No), the abnormality detection process ends, and the process moves to step S4 or the step S8. Specifically, as shown in FIG. 5, when the abnormality detection process in the step S10 ends (S11: No), the control portion 75 returns the process to step S4, and when the abnormality detection process in the step S20 ends (S11: No), the control portion 75 returns the process to step S8.

### <Step S12>

In step S12, the state determination processing portion 752 of the control portion 75 determines the drive state of the motor 71 based on the detection result of the current detecting portion 74. Here, when it is determined that the motor 71 is being driven (S12: Yes), the process moves to step S13, and when it is determined that the motor 71 is not being driven (S12: No), the process moves to step S121. For example, the state determination processing portion 752 determines that the motor 71 is being driven when current value of the drive current detected by the current detecting portion 74 is equal to or higher than a predetermined specific value, and determines that the motor 71 is not being driven when current value of the drive current is lower than the specific value. In addition, the state determination processing portion 752 may determine that the motor 71 is being driven when a state where current value of the drive current detected by the current detecting portion 74 is equal to or higher than a predetermined specific value, has continued for a predetermined time or more, and determine that the motor 71 is not being driven when the state where the current value of the drive current is equal to or higher than the specific value, has not continued for the predetermined time or more. It is noted that the state determination processing portion 752 may start the determination of the drive state of the motor 71 from a predetermined time before the passage of the specific time. This makes it possible in step S12 to branch the process quickly depending on the drive state of the motor 71.

### <Step S13>

In step S13, the abnormality determination processing portion 753 of the control portion 75 determines that an abnormality has occurred in the movement detecting portion 72 and moves the process to step S14. In this way, the abnormality determination processing portion 753 determines that an abnormality has occurred in the movement detecting portion 72 when the specific time has passed since the motor 71 started being driven and the state determination processing portion 752 determines that the motor 71 is being driven.

### <Step S121>

In step S121, the abnormality determination processing portion 753 of the control portion 75 determines that an abnormality has occurred in the motor 71 and moves the process to step S14. In this way, the abnormality determination processing portion 753 determines that an abnormality has occurred in the motor 71 when the specific time has passed since the motor 71 started being driven and the state determination processing portion 752 determines that the motor 71 is not being driven.

### <Step S14>

In step S14, the drive processing portion 751 of the control portion 75 outputs, to the motor driving portion 73, a drive control signal to stop driving the motor 71 such that the motor 71 stops being driven and the cleaning operation ends. With this configuration, the motor 71 stops being driven when the motor 71 has been driven, and even when the motor 71 has abnormally stopped, the power supply to the motor 71 is stopped. It is therefore possible to suppress the moving mechanism 70 and the motor 71 of the cleaning device 67 and the like from being damaged.

### <Step S15>

In step S15, the notification processing portion 754 of the control portion 75 executes an abnormality notification process to notify the determination result such as an occurrence of an abnormality determined in step S13 or step S121 and content of the abnormality and ends the abnormality detection process and the cleaning control process. For example, when it is determined in step S13 that an abnormality has occurred in the movement detecting portion 72, a message indicating that an abnormality has occurred in the movement detecting portion 72 is displayed on the operation/display portion 100. In addition, when it is determined in step S121 that an abnormality has occurred in the motor 71, a message indicating that an abnormality has occurred in the motor 71 is displayed on the operation/display portion 100.

As described above, in the image forming apparatus 10 according to the present embodiment, it is determined in the cleaning control process executed by the cleaning device 67 whether or not an abnormality has occurred in the movement detecting portion 72 or the motor 71. In particular, in the cleaning control process, the control portion 75 determines the drive state of the motor 71 only when the specific time has passed. That is, there is no need to monitor the drive current of the motor 71 input to an analog terminal of the control portion 75 until the specific time passes. As a result, compared to a case where the drive state of the motor 71 is always monitored based on the drive current of the motor 71, the processing of the control portion 75 is simplified, and the processing load of the control portion 75 is reduced.

It is noted that although the present embodiment describes an example case where the cleaning target is the outgoing windows 681 of the optical scan device 6, the cleaning target according to the present disclosure is not limited to the outgoing windows 681. For example, the cleaning target of the cleaning device of the present disclosure may be a variety of glass surfaces or wire. For example, the wire as the cleaning target may be a wire of the charging device provided in the process units 4 of the image forming apparatus 10.

In addition, the present embodiment describes an example case where the movement detecting portion 72 is an optical sensor. On the other hand, the movement detecting portion according to the present disclosure may be another type of sensor such as a contact-type sensor for detecting that the moving body 69A or 69B has reached the specific position by being displaced when it comes in contact with a part of the moving body 69A or 69B.

In addition, although the present embodiment describes an example case where one movement detecting portion 72 is provided, the movement detecting portion 72 may be provided at each of both ends of the outgoing windows 681. In this case, the state determination processing portion 752 of the control portion 75 can determine, in the abnormality detection process of the step S10, whether or not an abnormality has occurred in the movement detecting portion 72 provided at one end, and determine, in the abnormality detection process of the step S20, whether or not an abnormality has occurred in the movement detecting portion 72 provided at the other end.

In addition, although the present embodiment describes an example case where one motor 71 is provided, a plurality of motors 71 may be provided in correspondence with a plurality of moving bodies 69A and 69B. In this case, the state determination processing portion 752 of the control portion 75 can determine, in the abnormality detection process of the step S10 and the step S20, whether or not an abnormality has occurred with respect to each of the plurality of motors 71.

### [Appended notes on the invention]

The following notes are appended concerning a summary of the invention extracted from the above-described embodiment. It is noted that the configurations and processing functions explained in the following notes can be arbitrarily selected and combined.

### <Note 1>

A cleaning device comprising:
a moving mechanism configured to move a moving body along a cleaning target, the moving body including a cleaning portion that is in contact with the cleaning target;
a current detecting portion configured to detect a drive current of a drive source that supplies a driving force to the moving mechanism;
a movement detecting portion configured to detect the moving body at a predetermined specific position;
a drive processing portion configured to, upon detection of the moving body by the movement detecting portion after a start of a drive of the drive source, stop the drive source;
a state determination processing portion configured to, when the movement detecting portion does not detect the moving body before a predetermined specific time passes since the start of the drive of the drive source, determine a drive state of the drive source based on a detection result of the current detecting portion; and
an abnormality determination processing portion configured to determine that an abnormality has occurred in the movement detecting portion when the state determination processing portion determines that the drive source is being driven, and determine that an abnormality has occurred in the drive source when the state determination processing portion determines that the drive source is not being driven.

### <Note 2>

The cleaning device according to Note 1, wherein
when the movement detecting portion does not detect the moving body before the specific time passes since the start of the drive of the drive source, the drive processing portion stops the drive source.

### <Note 3>

The cleaning device according to Note 1 or 2, further comprising
a notification processing portion configured to notify a result of abnormality determination by the abnormality determination processing portion.

### <Note 4>

The cleaning device according to any one of Notes 1 to 3, wherein
the cleaning target is a light transmissive member provided on an irradiation path through which light emitted from an optical scan device based on image data to be scanned on a photoconductor is passed.

### <Note 5>

The cleaning device according to any one of Notes 1 to 4, wherein
the movement detecting portion is an optical sensor or a contact-type sensor.

### <Note 6>

An image forming apparatus comprising:
the cleaning device according to any one of Notes 1 to 5; and
an optical scan device configured to scan light on a photoconductor, wherein
the cleaning target is a light transmissive member provided on an irradiation path through which the light emitted from the optical scan device is passed.

It is to be understood that the embodiments herein are illustrative and not restrictive, since the scope of the disclosure is defined by the appended claims rather than by the description preceding them, and all changes that fall within metes and bounds of the claims, or equivalence of such metes and bounds thereof are therefore intended to be embraced by the claims.

## Claims

1. A cleaning device (67) comprising:
a moving mechanism (70) configured to move a moving body (69A, 69B) along a cleaning target, the moving body (69A, 69B) including a cleaning portion (691) that is in contact with the cleaning target;
a current detecting portion (74) configured to detect a drive current of a drive source (71) that supplies a driving force to the moving mechanism (70);
a movement detecting portion (72) configured to detect the moving body (69A, 69B) at a predetermined specific position;
a drive processing portion (751) configured to, upon detection of the moving body (69A, 69B) by the movement detecting portion (72) after a start of a drive of the drive source (71), stop the drive source (71);
a state determination processing portion (752) configured to, when the movement detecting portion (72) does not detect the moving body (69A, 69B) before a predetermined specific time passes since the start of the drive of the drive source (71), determine a drive state of the drive source (71) based on a detection result of the current detecting portion (74); and
an abnormality determination processing portion (753) configured to determine that an abnormality has occurred in the movement detecting portion (72) when the state determination processing portion (752) determines that the drive source (71) is being driven, and determine that an abnormality has occurred in the drive source (71) when the state determination processing portion (752) determines that the drive source (71) is not being driven.

2. The cleaning device (67) according to claim 1, wherein
when the movement detecting portion (72) does not detect the moving body (69A, 69B) before the specific time passes since the start of the drive of the drive source (71), the drive processing portion (751) stops the drive source (71).

3. The cleaning device (67) according to claim 1 or 2, further comprising
a notification processing portion (754) configured to notify a result of abnormality determination by the abnormality determination processing portion (753).

4. The cleaning device (67) according to claim 1 or 2, wherein
the cleaning target is a light transmissive member provided on an irradiation path through which light emitted from an optical scan device (6) based on image data to be scanned on a photoconductor is passed.

5. The cleaning device (67) according to claim 1 or 2, wherein
the movement detecting portion (72) is an optical sensor or a contact-type sensor.

6. An image forming apparatus (10) comprising:
the cleaning device (67) according to claim 1; and
an optical scan device (6) configured to scan light on a photoconductor, wherein
the cleaning target is a light transmissive member provided on an irradiation path through which the light emitted from the optical scan device (6) is passed.
